(19) Europäisches Patentamt
European Patent Office
Office européen des brevets

(11) **EP 2 632 036 A1**

(12) **EUROPEAN PATENT APPLICATION**

(43) Date of publication:
28.08.2013 Bulletin 2013/35

(51) Int Cl.:
*H02M 1/38* (2007.01)   *H02M 1/40* (2007.01)
*H02M 3/337* (2006.01)

(21) Application number: 13156221.7

(22) Date of filing: 21.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.02.2012   US 201261603179 P
14.01.2013   US 201313741220

(71) Applicants:
• **Moxtek, Inc.**
**Orem, UT 84057 (US)**

• **Wang, Dongbing**
**Lathrop, CA 95330 (US)**

(72) Inventor: **Wang, Dongbing**
**Lathrop**
**CA 95330 (US)**

(74) Representative: **Walker, Ross Thomson**
**Forresters**
**Skygarden**
**Erika-Mann-Strasse 11**
**80636 München (DE)**

(54) **Small size power supply**

(57)    An electrical circuit as part of a reduced size power supply with improved use of electrical power can include an isolation circuit between an LC switching circuit and a load, a parallel LC energy storage circuit, and / or a dual LC switching circuit.

Fig. 8

**Description**

FIELD OF THE INVENTION

The present application is related generally to power supplies.

BACKGROUND

A beneficial feature of power supplies, especially portable power supplies, is small size. As a result of power supply inefficiencies, larger components may be needed. These larger components, which may be needed to deal with inefficiencies, may increase the overall size of the power supply.

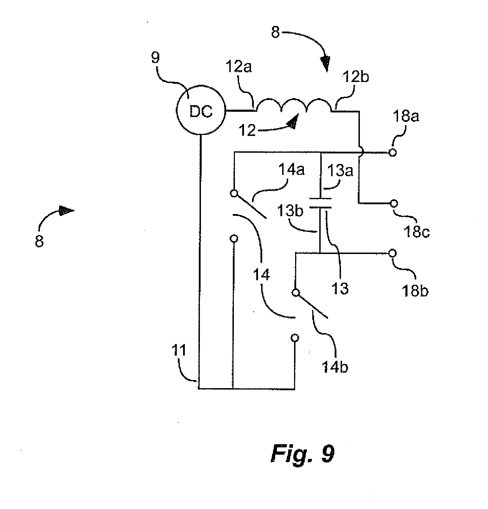

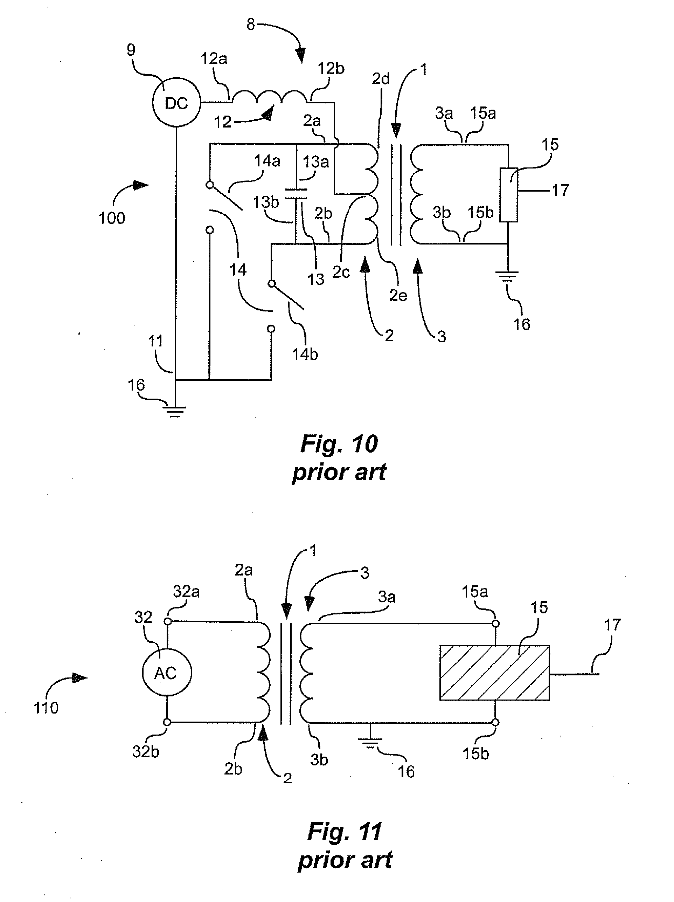

Prior art circuit 100, shown in FIG. 10, includes an LC switching circuit 8 as an alternating current supply, a transformer 1, and a load 15. The LC switching circuit 8 can be designed as a resonant circuit. The LC switching circuit 8 is also shown in FIG. 9 by itself for clarity.

The LC switching circuit 8 functions by direct current, from a direct current (DC) electrical power source 9, passing through a "switching inductor" 12 (called a "switching inductor" to differentiate from other inductors described herein) and through a center 2c of primary windings 2 on a transformer 1 to a first end 2a or a second end 2b of the primary windings 2. The electrical current can pass from the center 2c to one end or the other end (2a or 2b) of the primary windings 2 depending on which switch 14a or 14b is open and which is closed. For example, electrical current can pass through the center 2c to the first end 2a of the primary windings, then through the first switch 14a to common 11, if the first switch 14a is closed (on). Electrical current can pass through the center 2c to the second end 2b of the primary windings 2, then through the second switch 14b to common 11, if the second switch 14b is closed (on). Ideally, the switches 14a-b alternate position, with one open and one closed (e.g. 14a open and 14b closed), then immediately alternate position (e.g. 14a closed and 14b open), thus causing electrical current to pass in one direction, then another, through the primary windings 2 of the transformer 1.

This alternating current in the primary windings 2 can cause the transformer 1 to transfer alternating current to secondary windings 3 of the transformer 1. The secondary windings 3 can have two ends 3a-b electrically connected to two ends 15a-b, respectively, of the load 15.

This circuit 100 can allow the LC switching circuit 8 to provide alternating current at a relatively low amplitude, to primary windings 2 of the transformer 1, and due to a high turn ratio N, with many more secondary turns than primary turns, alternating current transferred to the secondary windings 3, and thus to the load 15, can have a relatively high voltage amplitude of alternating current.

If the load 15 is a capacitive load, then phase shifted feedback can be transferred from the secondary side 3 to the primary side 2 of the transformer 1. This feedback can be quite large if the transformer 1 has a high turn ratio N. This feedback can adversely affect the switches 14, such as by increasing shut off time. An increased switch shut off time can result in both switches remaining closed (on) for a short time period. Having both switches 14 closed at the same time can short circuit the transformer 1, which can result in an electrical current spike through the switches 14. This electrical current spike can waste electrical power, generate heat, and can burn out or damage the switches 14. One method for avoiding damage to the switches 14 is to use larger switches, but use of larger switches can be undesirable if a small power supply is desired.

As shown in FIG. 11, circuit 110 includes an alternating current supply 32 which can provide alternating current to primary windings 2 of a transformer 1. The alternating current supply 32 can be an LC switching circuit 8 as described above, with an additional wire (not shown) attached to a center of the transformer 1, or can be another type of alternating current supply. Secondary windings 3 of the transformer can provide alternating current to an alternating current to a load 15, which can be a direct current (AC to DC) rectifying circuit.

The AC to DC rectifying circuit can provide a direct current line 17 to another device. One example of an AC to DC rectifying circuit is a high voltage multiplier, which can be used to provide a large voltage differential, such as tens of kilovolts, between a cathode and an anode of an x-ray tube.

AC to DC rectifying circuits typically draw electrical current for a small part of each period of alternating current. As a result of lack of electrical current through the secondary windings 3 during part of each alternating current cycle, electrical current through the primary windings 2 can saturate a core of the transformer 1. Two problems that can result from lack of electrical current draw by secondary windings 3 during part of each alternating current cycle are (1) a larger core may be needed, in order to avoid core saturation, thus resulting in a possible need for a larger power supply, and (2) electrical power can be wasted.

SUMMARY

It has been recognized that it would be advantageous to have a power supply that is relatively small in size and to reduce electrical power loss. The following embodiments are directed to electrical circuits that can provide electrical power and satisfy the needs for relatively small size and / or reduced electrical power loss.

In one embodiment, the electrical circuit comprises an LC switching circuit that can provide alternating current to a first transformer. Secondary windings of the first transformer can provide alternating current to primary windings of a second transformer. Secondary windings of the second transformer can provide electrical power to a load. An intermediate circuit formed by secondary windings of the first transformer and primary windings of the second transformer can provide isolation between the load and the LC switching circuit. This isolation can prevent or minimize feedback from the load from causing switches in the LC switching circuit to malfunction. Such malfunction, which this circuit is designed to avoid, could result in a short circuit, electrical current spikes through the switches, and a need for larger switches in order to avoid damage to the switches. Therefore, with this design, by avoiding such short circuits caused by switch malfunction, smaller switches may be used, allowing for decreased overall power supply size. Also, wasted power, and reduced undesirable heating caused by such wasted power, can also be avoided.

In another embodiment, the electrical circuit comprises an alternating current supply providing alternating current to a transformer. A "parallel inductor," a "parallel capacitor," and secondary windings of the transformer can be connected in parallel and can have two common connections or nodes that are connections for a load. When this circuit is used to provide electrical power to a load, such as an AC to DC rectifying circuit, electrical power can be stored in the parallel inductor and the parallel capacitor during periods when the load is not drawing electrical current. This electrical power can then be released when the load is drawing electrical current. This design minimizes the chance of transformer core saturation because secondary windings can draw electrical current even when no electrical current will pass through the load. Therefore, the transformer core can be smaller and electrical power can be saved.

In another embodiment, the electrical circuit comprises an LC switching circuit providing alternating current to primary windings of a transformer. Secondary windings of the transformer can provide alternating current to a load. A first capacitor can be attached between a first end of the primary windings and a center of the primary windings and in parallel with a first section of the primary windings (between the first end and the center). A second capacitor can be attached between a second end of the primary windings and the center of the primary windings and in parallel with a second section of the primary windings (between the second end and the center). The first and second capacitors, along with the primary windings, can be designed for high impedance during periods when the secondary windings are not drawing electrical current, thus minimizing electrical current through primary windings during such periods, and avoiding transformer core saturation. This can allow the transformer core to be smaller and can result in electrical power savings.

## BRIEF DESCRIPTION OF THE DRAWINGS

FIG. 1 is a schematic of an isolated switching control circuit and a load, in accordance with an embodiment of the present invention;

FIG. 2 is a schematic cross-sectional side view of the circuit of FIG. 1 and an x-ray tube, in accordance with an embodiment of the present invention;
FIG. 3 is a schematic of an energy storage circuit, in accordance with an embodiment of the present invention;
FIG. 4 is a schematic of the circuit of FIG. 3 electrically connected to a load, in accordance with an embodiment of the present invention;
FIG. 5 is a schematic of a dual LC circuit, in accordance with an embodiment of the present invention;
FIG. 6 is a schematic of a combined dual LC and energy storage circuit, in accordance with an embodiment of the present invention;
FIG. 7 is a schematic cross-sectional side view of the electrical circuit of FIGs. 3, 4, 5, 6, or 8 providing electrical power to a high voltage multiplier, the high voltage multiplier providing DC voltage between a cathode and an anode of an x-ray tube, in accordance with an embodiment of the present invention;
FIG. 8 is a schematic of a combined isolated switching control, dual LC, and energy storage circuit, in accordance with an embodiment of the present invention;
FIG. 9 is a schematic of an LC switching circuit, in accordance with an embodiment of the present invention;
FIG. 10 is a schematic of an LC switching circuit, a transformer, and a load, in accordance with the prior art; and
FIG. 11 is a schematic of an alternating current source, a transformer, and a load, in accordance with the prior art.

## DETAILED DESCRIPTION

Isolation of Switching Control Circuit

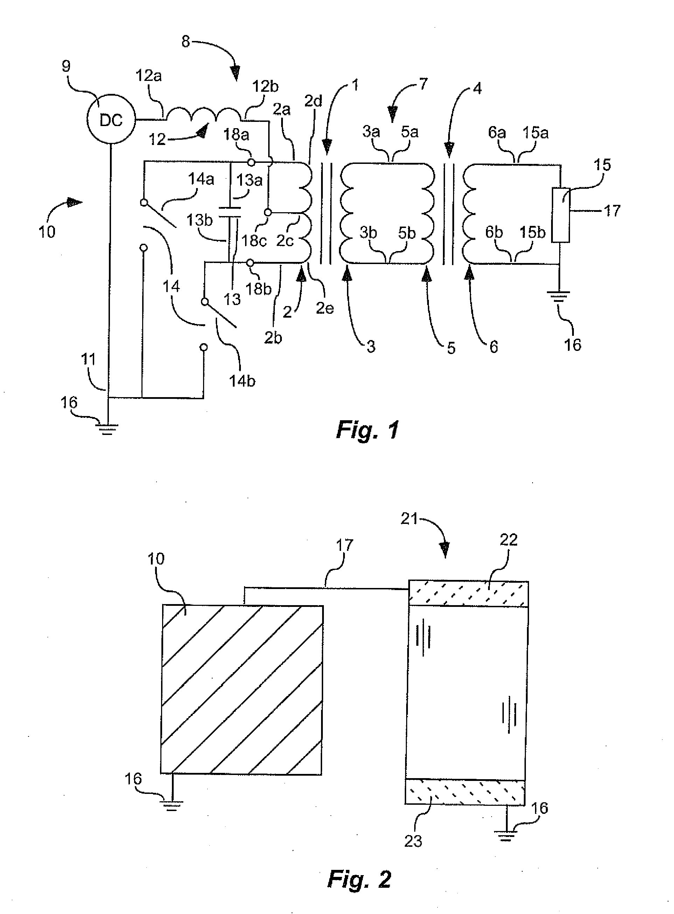

As illustrated in FIG. 1, an electrical circuit 10, sometimes referred to as an "isolated switching control circuit," is shown comprising an LC switching circuit 8 for alternating current generation (the LC switching circuit 8 is also shown in FIG. 9 by itself for clarity), two transformers 1 and 4, and connections for a load 15a-b. The first transformer 1 can include first primary windings 2 and first secondary windings 3 wrapped around a first transformer core. The second transformer 4 can include second primary windings 5 and second secondary windings 6 wrapped around a second transformer core. Two ends 3a-b of first secondary windings 3 can be electrically connected to two ends 5a-b, respectively, of the second primary windings 5, forming an isolation circuit 7.

The LC switching circuit 8 can comprise a direct current source 9, a "switching inductor" 12 (called a "switching inductor" to differentiate from other inductors described herein), a "switching capacitor" 13 (called a "switching capacitor" to differentiate from other capacitors described herein), a first switch 14a, and a second switch 14b. A first terminal 18a of the LC switching circuit 8 can be connected to a first end 2a of the first primary windings 2. A second terminal 18b of the LC switching circuit 8 can be connected to a second end 2b of the first primary windings 2. A third terminal 18c of the LC switching circuit 8 can be connected to a center 2c of the first primary windings 2. The LC switching circuit 8 can be designed as a resonant circuit.

The direct current source 9 can be electrically connected to a common connection 11 at one end and to a first connection 12a of the switching inductor 12 at another end. A second connection 12b of the switching inductor 12 can be electrically connected to a center 2c of the first primary windings 2. The switching capacitor 13 can be electrically connected in parallel with the first primary windings 2, and electrically connected between two ends 2a-b of the first primary windings 2.

A first electronic switch 14a can be electrically connected to the common connection 11 at one end, and at an opposing end to a first connection 13a of the switching capacitor 13 and a first connection 2a to the first primary windings 2. A second electronic switch 14b can be electrically connected to the common connection 11 at one end and at an opposing end to a second connection 13b of the switching capacitor 13 and a second end of 2b the first primary windings 2. In one embodiment, the common connection 11 can be a ground 16 connection.

The first primary windings 2 can have a first section 2d comprising primary windings between the first end 2a and the center 2c. The first primary windings 2 can have a second section 2e comprising primary windings between the center 2c and the second end 2b.

The second secondary windings 6 can have two ends 6a-b configured to be electrically connected to, or actually electrically connected to, two ends 15a-b, respectively, of a load 15. In one embodiment, one end 15b of the load 15 can be electrically connected to ground 16. The load 15 can be a capacitive load.

The isolation circuit 7 can partially or substantially block feedback from the load 15 from adversely affecting the LC switching circuit 8. As previously discussed, feedback from the load 15 can potentially damage switches 14 in the alternating current supply circuit. Thus, the isolation circuit 7 can help prevent feedback from the load 15 from causing malfunction of the switches 14 in the LC switching circuit 8 and thus avoid short circuiting caused by both switches 14 being closed at the same time. Avoidance of such short circuiting can reduce wasted electrical power and reduce heating that would otherwise be caused by high electrical current during periods of short circuit. Avoidance of such short circuiting can also allow use of smaller switches 14, because there will be no need to design circuits with larger switches merely for protection against continuous, repetitive short circuit damage. Use of smaller switches can allow manufacture of a smaller overall power supply.

Turn ratios of the two transformers 1 and 4 can be selected for improved blocking of undesirable load 15 feedback to the LC switching circuit 8. A larger turn ratio N of a transformer can result in a larger transformer capacitance $C_{Tr}$ according to the formula $C_{Tr} = N^2 * C_o$ in which $C_o$ is the distributed capacitance of the transformer. A larger transformer capacitance $C_{Tr}$ can result in a larger feedback signal being transferred from secondary windings to primary windings of a transformer. Also, a larger turn ratio N of a transformer can result in a larger voltage differential between primary and secondary windings. This larger voltage differential can also result in noise from the secondary side of the transformer having a larger effect on components in the primary side of the transformer.

In one embodiment, the second transformer 4 has a high turn ratio $N_2$ relative to a first transformer 1, which has a low turn ratio $N_1$ relative to the second transformer. The second transformer 4 can thus be used primarily for stepping up voltage. A large noise signal can be transferred from the load 15, across the second transformer 4, to the isolation circuit 7, due to the second transformer's relatively large turn ratio $N_2$, resulting in a relatively large second transformer 4 capacitance $C_{Tr2}$, and relatively large voltage differential across the second transformer 4. The first transformer 1, with the relatively low turn ratio $N_1$, and thus relatively low capacitance $C_{Tr1}$ and relatively low (or no) voltage differential can be used primarily for blocking or minimizing load feedback from adversely affecting the switches 14. Thus, design of the second transformer 4 with a relatively high turn ratio $N_2$ and the first transformer 1 with a relatively low turn ratio $N_1$ can provide improved protection for the switches 14 so that they operate as designed, with a rapid turn off (open) time.

The first transformer 1 can have a turn ratio of less than 1:5 in one embodiment, a turn ratio of less than 1:3 in another embodiment, or a turn ratio of 1:1 in another embodiment, in which the first number of the ratio is a number of turns of first primary windings 2 and the second number of the ratio is a number of turns of first secondary windings 3.

The second transformer 4 can have a turn ratio of at least than 1:10 in one embodiment, at least 1:50 in another embodiment, at least than 1:75 in another embodiment, or at least than 1:100 in another embodiment, in which the first number of the ratio is a number of turns of second primary windings 5 and the second number of the ratio is a number of turns of second secondary windings 6.

Because higher voltage differentials between the load 15 and the switches 14 can result in increased interference with switch operation, the isolated switching control circuit 10 can be especially useful for circuit designs with a large voltage differential between the load 15 and the switches 14. The isolated switching control circuit 10 can be configured to provide a peak voltage to the second secondary windings 6 that is at least 500 volts higher than a peak voltage of the first primary windings 2 in one embodiment, at least 1000 volts higher than a peak voltage of the first primary windings 2 in another embodiment, or at least 2000 volts higher than a peak voltage of the first primary windings 2 in another embodiment.

In one embodiment, the load 15 can be a high voltage multiplier circuit and can provide a high voltage DC output 17. As shown in FIG. 2, the electrical circuit 10 can provide a voltage differential between a cathode 22 and an anode 23 of an x-ray tube 21. The voltage differential between the cathode 22 and the anode 23 can be at least 1 kilovolt in one embodiment or at least 9 kilovolts in another embodiment. The anode 23 of the x-ray tube 21 can be electrically connected to ground 16.

Energy Storage

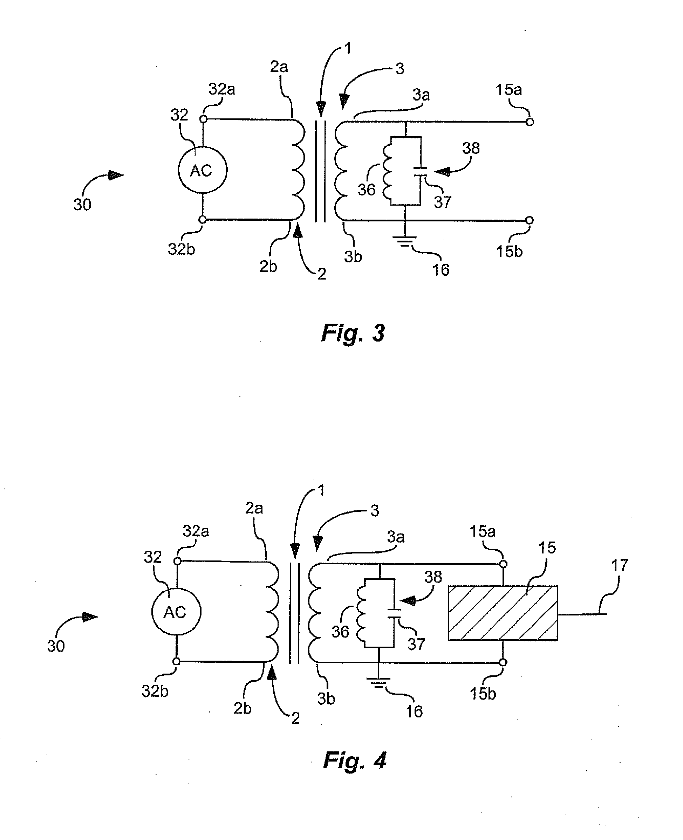

As illustrated in FIG. 3, an electrical circuit 30 sometimes referred to as an "energy storage circuit," is shown comprising an alternating current supply 32, a transformer 1, a parallel LC energy storage circuit 38, and connection points 15a-b, which can be electrical connections for a load.

The transformer 1 can include a transformer core, primary windings 2, and secondary windings 3. The alternating current supply 32 can include a first connection 32a, which can be electrically connected to a first end 2a of the primary windings 2 on the transformer 1; and a second connection 32b which can be electrically connected to a second end 2b of the primary windings 2 on the transformer 1.

A first end 3a of the secondary windings 3 on the transformer 1 can be electrically connected to a first connection point (or first load connection point) 15a. A second end 3b of the secondary windings 3 on the transformer 1 can be electrically connected to a second connection point 15b. In one embodiment, the second connection point (or second load connection point) 15b can be electrically connected to ground 16.

The parallel LC energy storage circuit 38 can comprise a parallel inductor 36 and a parallel capacitor 37 electrically connected in parallel with secondary windings 3 between the first connection point 15a and the second connection point 15b. The secondary windings 3, the parallel inductor 36, and the parallel capacitor 37 can all be electrically connected in parallel having nodes, or connection points 15a-b, in common. Note that the terms "parallel inductor" and "parallel capacitor" are used to distinguish this inductor 36 and this capacitor 37, that are electrically connected in parallel, from other capacitors and inductors described herein.

The first connection point 15a and the second connection point 15b can be configured for connection to a load. As shown in FIG. 4, the electrical circuit 30 can provide electrical power to a load 15. The load 15 can be electrically connected between the first connection point 15a and the second connection point 15b. The load 15, the parallel inductor 36, the parallel capacitor 37, and the secondary windings 3 can all be electrically connected in parallel.

The load 15 can be an alternating current to direct current (AC to DC) rectifying circuit with DC output 17. The AC to DC rectifying circuit can be a high voltage multiplier circuit.

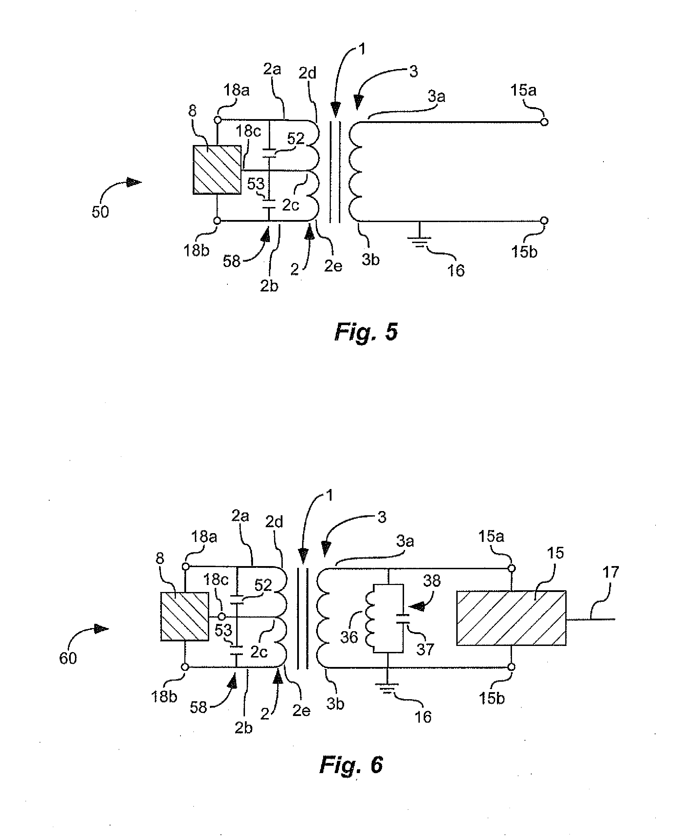

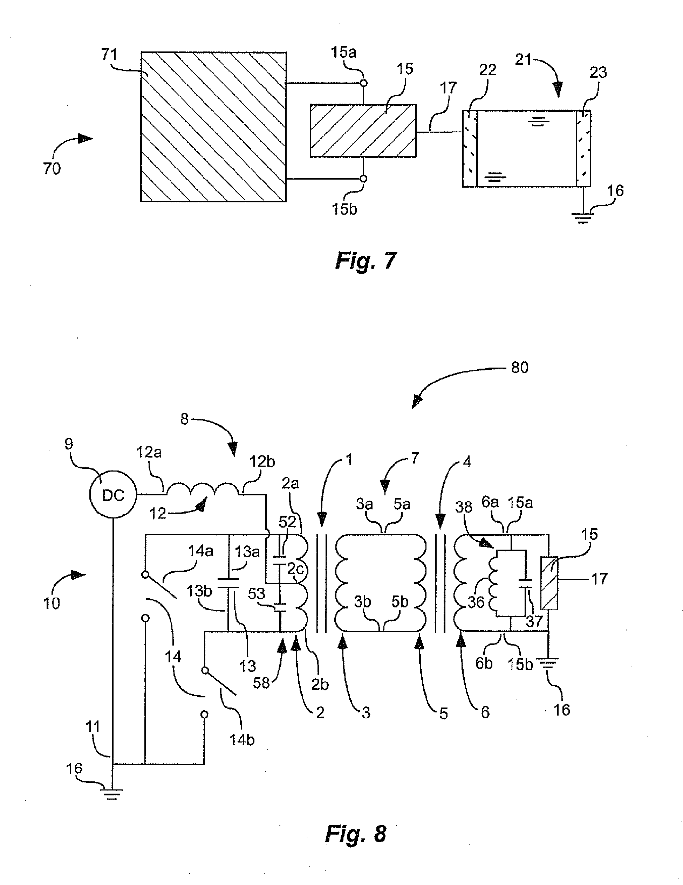

The alternating current supply 32 shown in FIGs. 3-4, with an additional center connection 2c to the primary windings, can be an LC switching circuit 8, as was described previously in reference to FIG. 1, and as will be described below in reference to FIGs. 6 and 8. The alternating current supply 32 can include secondary windings of a transformer. The alternating current supply 32 can be another suitable type of alternating current supply.

For improved operation of the electrical circuit 30 of FIGs. 3-4, and electrical circuits 60, 70, and 80 of FIGs. 6-8, alternating current frequency f of the alternating current supply 32, capacitance Cp of the parallel capacitor 37, and inductance $L_P$ of the parallel inductor 36 can be selected to approximate the following equality:

$$f \approx \frac{1}{2*\pi*\sqrt{L_P*C_P}}.$$

Dual LC

As illustrated in FIG. 5, an electrical circuit 50, sometimes referred to as a "dual LC circuit," is shown comprising an LC switching circuit 8 (shown in FIG. 9), a transformer 1, a dual capacitor circuit 58, and connection points 15a-b which can be electrical connections for a load.

The transformer 1 can include a transformer core, primary windings 2, and secondary windings 3. The LC switching circuit 8 can include a first terminal 18a which can be electrically connected to a first end 2a of the primary windings 2 on the transformer 1; a second terminal 18b which can be electrically connected to a second end 2b of the primary windings 2 on the transformer 1; and a middle terminal 18c which can be electrically connected to a center 2c of the primary windings 2 on the transformer 1.

The primary windings 2 can include a first section 2d comprising primary windings between the first end 2a and the center 2c. The primary windings 2 can include a second section 2e comprising primary windings between the second end 2b and the center 2c.

The dual capacitor circuit 58 can comprise a first capacitor 52 and a second capacitor 53. The first capacitor 52 can be electrically connected between the first end 2a and the center 2c of the primary windings 2, and in parallel with the first section 2d of the primary windings 2. The second capacitor 53 can be electrically connected between the second end 2b and the center 2c of the primary windings 2, and in parallel with the second section 2e of the primary windings 2.

A first end 3a of the secondary windings 3 on the transformer 1 can be electrically connected to a first connection point 15a. A second end 3b of the secondary windings 3 on the transformer 1 can be electrically connected to a second connection point 15b. The second connection point 15b can be electrically connected to ground 16. The first connection point 15a and the second connection point 15b can be configured for connection to a load, with the first connection 15a electrically connected to one end of the load and the second connection 15b electrically connected to an opposing end of the load.

For improved operation of the electrical circuits 50-80 of FIGs. 5-8, dual LC resonant circuits can be designed for one, or preferably two, LC resonant circuits, a first LC resonant circuit and / or a second LC resonant circuit.

In one example embodiment, a first LC resonant circuit can comprise the first capacitor 52 in combination with the first section 2d of the primary windings 2. The first capacitor can have a capacitance of $C_{R1}$. The first section 2d can have a first section inductance $L_{P1}$ and a first section capacitance $C_{P1}$. First LC resonant circuit capacitance $C_{RP1}$ can equal the sum of the first capacitor capacitance $C_{R1}$ and the first section capacitance $C_{P1}$: $C_{RP1} = C_{R1} + C_{P1}$. Alternating current frequency f of the LC switching circuit 8, first LC resonant circuit capacitance $C_{P1}$, and first section inductance $L_{P1}$ can be selected to approximate the following equality:

$$f \approx \frac{1}{2 * \pi * \sqrt{L_{P1} * C_{RP1}}}.$$

In another example embodiment, a second LC resonant circuit can comprise the second capacitor 53 in combination with the second section 2e of the primary windings 2. The second capacitor can have a capacitance of $C_{R2}$. The second section 2e can have a second section inductance $L_{P2}$ and a second section capacitance $C_{P2}$. Second LC resonant circuit capacitance $C_{RP2}$ can equal the sum of the second capacitor capacitance $C_{R2}$ and the second section capacitance $C_{P2}$: $C_{RP2} = C_{R2} + C_{P2}$. Alternating current frequency f of the LC switching circuit 8, second LC resonant circuit capacitance $C_{P2}$, and second section inductance $L_{P2}$ can be selected to approximate the following equality:

$$f \approx \frac{1}{2 * \pi * \sqrt{L_{P2} * C_{RP2}}}.$$

Impedances $L_{P1}$ and $L_{P2}$ of the first and second sections 2d and 2e can be the impedance of these sections when the secondary windings are not drawing electrical current, and thus no electrical power is transferred across the transformer 1. A parallel LC resonant circuit has theoretically infinite resistance, and thus can minimize or prevent electrical current from flowing through the circuit. Thus, by use of dual LC resonant circuits, electrical current through primary windings 2 can be impeded or minimized during periods when the secondary windings 3 are not drawing electrical current. This can result in electrical power savings and may allow for use of a smaller transformer by avoiding core saturation.

The dual LC circuit 50 can be especially useful if larger voltage differentials between primary 2 windings and a load are desired, because it may be impractical in such a design to increase primary winding turns in order to increase primary side impedance. The dual LC circuit 50 (and also shown combined with other circuits in FIGs. 6-8) can be configured to provide a peak voltage to secondary windings (3 in FIGs. 5-6 or 6 in FIG. 8) or to a load (15 in FIG. 6 or 15 in FIG. 8) that is at least 500 volts higher than a peak voltage of the first primary windings in one embodiment, at least 1000 volts higher than a peak voltage of the first primary windings in another embodiment, or at least 2000 volts higher than a peak voltage of the first primary windings in another embodiment.

While examples have been provided for selecting values for the components in the dual LC resonant circuits, the examples are not intended to be limiting. Component values may be selected using other processes as well to obtain a desired result from the LC resonant circuit.

Energy Storage and Dual LC

As shown in FIG. 6, in one embodiment, electrical circuit 60 can include both the parallel LC energy storage circuit 38 and the dual capacitor circuit 58, for improved circuit efficiency. Also, a load 15 can be electrically connected between the first connection point 15a and the second connection point 15b. The load 15 can be an alternating current to direct current (AC to DC) rectifying circuit with DC output 17. The AC to DC rectifying circuit can be a high voltage multiplier circuit.

Energy Storage and / or Dual LC Connected to a Load

Shown in FIG. 7 is an x-ray source 70, including one of the electrical circuits 10, 30, 50, 60, or 80 described herein can provide electrical power to a load 15, which can be a high voltage multiplier circuit. The high voltage multiplier circuit can provide DC high bias voltage 17, such as at least 9 kilovolts, between a cathode 22 and an anode 23 of an x-ray tube 21. Other DC high bias voltage levels may be provided as well.

The electrical circuits 30, 50, 60, 70, and 80 shown in FIGs. 3-8 can be especially useful for AC to DC rectifying circuits, including high voltage multiplier circuits. In these types of circuits, the load typically draws electrical current for only a small portion of each period of alternating current. In the prior art circuit 100 shown in FIG. 10, and described previously, if the load 15 is an AC to DC rectifying circuit, the transformer core can saturate, if the core is not large enough, due to repeated periods of time in which there is no current draw by the secondary circuit. This is especially true if there is a high turn ratio on the transformer 1 with few primary and many secondary winding turns on the core. In order to avoid core saturation, a larger core may be needed.

The electrical circuits 30, 50, 60, 70, and 80 shown in FIGs. 3-8, however, include a parallel LC energy storage circuit 38 and / or a dual capacitor circuit 58. The parallel LC energy storage circuit 38 can store electrical energy during time periods when the load 15 is not drawing electrical current and can release this electrical energy when the load does draw electrical current. The dual capacitor circuit 58, along with sections of primary windings 2d and 2e, can have high impedance and minimize electrical current flow through primary windings 2 during periods when the load 15 is not drawing electrical current. Use of one or both of these circuits 38 and / or 58 can result in electrical power savings and allow use of a smaller transformer core without core saturation. The use of a smaller transformer core can allow the design and construction of a smaller power supply.

Isolation of Switching Control Circuit, Energy Storage and Dual LC Resonance Combined

As shown in FIG. 8, the isolated switching control circuit 10, the parallel LC energy storage circuit 38, and the dual capacitor circuit 58, all described previously, can be combined into a single circuit 80, thus receiving the combined benefits of reduced overall size and increased electrical power efficiency from each. In one embodiment of circuit 80 of FIG. 8, the load 15 can be a high voltage multiplier circuit, and the high voltage DC output 17 can be a DC high bias voltage for an x-ray tube 21.

**Claims**

1. An electrical circuit comprising:

   a. a first transformer having first primary windings and first secondary windings wrapped around a first transformer core;
   b. the first primary windings including a first end, a second end, a center, a first section comprising first primary windings between the first end and the center, and a second section comprising first primary windings between the second end and the center;
   c. a second transformer having second primary windings and second secondary windings wrapped around a second transformer core;
   d. the first secondary windings having two ends electrically connected to two ends of the second primary windings, respectively, forming an isolation circuit;
   e. an alternating current generation circuit comprising:

   i. a direct current source electrically connected to a common connection at one end and to a first connection of a switching inductor at another end;
   ii. a second connection of the switching inductor electrically connected to a center of the first primary windings;
   iii. a switching capacitor having a first end electrically connected to the first end of the first primary windings, and at an opposing end, a second end electrically connected to the second end of the first primary windings, and electrically connected in parallel with the first primary windings;
   iv. a first electronic switch electrically connected to the common connection at one end and at an opposing end connected to the first end of the switching capacitor and the first end of the first primary windings;
   v. a second electronic switch electrically connected to the common connection at one end and at an opposing end to the second end of the switching capacitor and the second end of the first primary windings; and

   f. the second secondary windings having two ends configured to be electrically connected to two ends of a load.

2. The electrical circuit of claim 1, further comprising:

   a. a first capacitor electrically connected at one end to the first end of the first primary windings, at an opposing end to the center of the primary windings, and in parallel with the first section of the first primary windings; and
   b. a second capacitor electrically connected at one end to the second end of the first primary windings, at an opposing end to the center of the primary windings, and in parallel with the second section of the first primary windings.

3. The electrical circuit of claim 2, wherein:

   a. alternating current frequency $f$ of the alternating current supply, capacitance $C_{R1}$ of the first capacitor, inductance $L_{P1}$ and capacitance $C_{P1}$ of the primary windings between the first end and the center are selected to approximate the following equalities: $C_{RP1} = C_{R1} + C_{P1}$ and

   $$f \approx \frac{1}{2 * \pi * \sqrt{C_{RP1} * L_{P1}}};$$ and b. the alternating current frequency f of the alternating current supply, capacitance $C_{R2}$ of the second capacitor, inductance $L_{P2}$ and capacitance $C_{P2}$ of the primary windings between the second end and the center are selected to approximate the following equalities: $C_{RP2} = C_{R2} + C_{P2}$ and

$$f \approx \frac{1}{2 * \pi * \sqrt{C_{RP2} * L_{P2}}}.$$

4. The electrical circuit of claim 3, further comprising a parallel inductor and a parallel capacitor electrically connected in parallel between the two ends of the first secondary windings and in parallel with the first secondary windings.

5. The electrical circuit of claim 4, wherein alternating current frequency f of the alternating current supply, capacitance $C_P$ of the parallel capacitor, and inductance $L_P$ of the parallel inductor are selected to approximate the following equality:

$$f \approx \frac{1}{2 * \pi * \sqrt{L_P * C_P}}.$$

6. The electrical circuit of claim 2, further comprising a parallel inductor and a parallel capacitor electrically connected in parallel between the two ends of the first secondary windings and in parallel with the first secondary windings.

7. The electrical circuit of claim 1, further comprising a parallel inductor and a parallel capacitor electrically connected in parallel between the two ends of the first secondary windings and in parallel with the first secondary windings.

8. The electrical circuit of claim 7, wherein alternating current frequency f of the alternating current supply, capacitance Cp of the parallel capacitor, and inductance $L_P$ of the parallel inductor are selected to approximate the following equality:

$$f \approx \frac{1}{2 * \pi * \sqrt{L_P * C_P}}.$$

9. The electrical circuit of claim 7, further comprising:

   a. the load and wherein the load wherein the load is a high voltage multiplier circuit electrically connected to the two ends of the second secondary windings;
   b. an x-ray tube; and
   c. the high voltage multiplier circuit is configured to provide at least 1 kilovolt of voltage differential between a cathode and an anode of the x-ray tube.

10. The electrical circuit of claim 1, wherein:

   a. the first transformer has a turn ratio of less than 1:5 in which 1 is a number of turns of first primary windings of the first transformer and 5 is a number of turns of first secondary windings of the first transformer; and
   b. the second transformer has a turn ratio of at least 1:10 in which 1 is a number of turns of second primary windings of the second transformer and 10 is a number of turns of second secondary windings of the second transformer.

11. The electrical circuit of claim 10, wherein the second transformer has a turn ratio of at least 1:50.

12. The electrical circuit of claim 1, further comprising the load and wherein the load is a capacitive load electrically connected to two ends of the second secondary windings.

13. The electrical circuit of claim 1, further comprising an x-ray tube and wherein the load is a high voltage multiplier circuit that is configured to provide at least 1 kilovolt of voltage differential between a cathode and an anode of the x-ray tube.

14. The electrical circuit of claim 1, wherein the circuit is configured to provide a peak voltage to the second secondary windings that is at least 500 volts higher than a peak voltage of the first primary windings.

15. The electrical circuit of claim 1, wherein the circuit is configured to provide a peak voltage to the second secondary windings that is at least 1000 volts higher than a peak voltage of the first primary windings.

**Fig. 1**

**Fig. 2**

**Fig. 3**

**Fig. 4**

**Fig. 5**

**Fig. 6**

**Fig. 7**

**Fig. 8**

**Fig. 9**

Fig. 10
prior art

Fig. 11
prior art

Europäisches
Patentamt

European
Patent Office

Office européen
des brevets

# EUROPEAN SEARCH REPORT

Application Number

EP 13 15 6221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/105305 A1 (SAWADA SHINICHI [JP] ET AL) 19 May 2005 (2005-05-19) | 1,10-15 | INV. |
| Y | * figure 4 * | 2-9 | H02M1/38 |
| | * figure 9 * | | H02M1/40 |
| | * figure 16 * | | H02M3/337 |
| | * paragraph [0127] * | | |
| | * paragraph [0130] * | | |
| | * paragraph [0182] * | | |
| | * paragraph [0190] * | | |
| | * paragraph [0194] * | | |
| | * paragraph [0228] * | | |
| | ----- | | |
| Y | EP 0 647 086 A1 (FUJIMURA TADAMASA [JP]; USHIJIMA MASAKAZU [JP] USHIJIMA MASAKAZU [JP]) 5 April 1995 (1995-04-05) | 1 | |
| | * figure 2 * | | |
| | * column 1, line 17 - line 25 * | | |
| | * column 3, line 58 - column 4, line 13 * | | |
| | * column 5, line 5 - line 9 * | | |
| | * column 6, line 36 - line 55 * | | |
| | ----- | | TECHNICAL FIELDS SEARCHED (IPC) |
| Y | US 6 008 589 A (DENG EDWARD E [US] ET AL) 28 December 1999 (1999-12-28) | 1 | H02M |
| | * figure 2a * | | |
| | ----- | | |
| Y | US 2009/195303 A1 (BOWHERS WILLIAM J [US]) 6 August 2009 (2009-08-06) | 1 | |
| | * figure 3 * | | |
| | * abstract * | | |
| | * paragraph [0023] * | | |
| | * paragraph [0031] - paragraph [0032] * | | |
| | ----- | | |
| Y | US 3 781 643 A (KING J) 25 December 1973 (1973-12-25) | 2-6 | |
| | * figure 1 * | | |
| | * column 1, line 17 - line 22 * | | |
| | * column 2, line 35 - line 50 * | | |
| | ----- | | |
| | -/-- | | |

The present search report has been drawn up for all claims

| Place of search | Date of completion of the search | Examiner |
|---|---|---|
| The Hague | 31 May 2013 | Riehl, Philippe |

EPO FORM 1503 03.82 (P04C01)

Europäisches
Patentamt

European
Patent Office

Office européen
des brevets

# EUROPEAN SEARCH REPORT

Application Number

EP 13 15 6221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 161 374 A (SVERDLIN ANATOLY [US]) 19 December 2000 (2000-12-19) * figure 1 * * column 4, line 1 - line 4 * ----- | 4-9 | |
| | | | **TECHNICAL FIELDS SEARCHED (IPC)** |

The present search report has been drawn up for all claims

| Place of search | Date of completion of the search | Examiner |
|---|---|---|
| The Hague | 31 May 2013 | Riehl, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ...............................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 15 6221

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2013

| Patent document cited in search report | | Publication date | Patent family member(s) | | Publication date |
|---|---|---|---|---|---|
| US 2005105305 | A1 | 19-05-2005 | CN<br>JP<br>US | 1606395 A<br>2005129004 A<br>2005105305 A1 | 13-04-2005<br>19-05-2005<br>19-05-2005 |
| EP 0647086 | A1 | 05-04-1995 | DE<br>DE<br>EP<br>HK<br>JP<br>JP<br>US | 69412742 D1<br>69412742 T2<br>0647086 A1<br>1009061 A1<br>2733817 B2<br>H0767357 A<br>5495405 A | 01-10-1998<br>06-05-1999<br>05-04-1995<br>24-03-2000<br>30-03-1998<br>10-03-1995<br>27-02-1996 |
| US 6008589 | A | 28-12-1999 | NONE | | |
| US 2009195303 | A1 | 06-08-2009 | NONE | | |
| US 3781643 | A | 25-12-1973 | NONE | | |
| US 6161374 | A | 19-12-2000 | NONE | | |

EPO FORM P0459

For more details about this annex : see Official Journal of the European Patent Office, No. 12/82